(19) Europäisches Patentamt
European Patent Office
Office européen des brevets

(11) Veröffentlichungsnummer : **0 116 513**
**B1**

# (12) EUROPÄISCHE PATENTSCHRIFT

(45) Veröffentlichungstag der Patentschrift : **15.03.89**

(21) Anmeldenummer : **84810013.7**

(22) Anmeldetag : **09.01.84**

(51) Int. Cl.⁴ : **C 09 B 44/08**, C 09 B 33/04, D 21 H 3/80, C 09 B 44/02// C09B43/16

## (54) Wasserlösliche Triazinverbindungen.

(30) Priorität : **14.01.83 CH 207/83**

(43) Veröffentlichungstag der Anmeldung : **22.08.84 Patentblatt 84/34**

(45) Bekanntmachung des Hinweises auf die Patenterteilung : **15.03.89 Patentblatt 89/11**

(84) Benannte Vertragsstaaten : **BE CH DE FR GB LI SE**

(56) Entgegenhaltungen :
**GB-A- 2 007 250**
**GB-A- 2 081 734**

(73) Patentinhaber : **CIBA-GEIGY AG**
**Klybeckstrasse 141**
**CH-4002 Basel (CH)**

(72) Erfinder : **Ramanathan, Visvanathan, Dr.**
**Friedensgasse 24**
**CH-4056 Basel (CH)**
Erfinder : **Möckli, Peter, Dr.**
**Sandgrubenstrasse 13**
**CH-4124 Schönenbuch (CH)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 116 513 B1

Jouve, 18, rue St-Denis, 75001 Paris, France

**Beschreibung**

Die Erfindung betrifft neue wasserlösliche Triazinverbindungen, Verfahren zu deren Herstellung sowie deren Verwendung als Farbstoffe zum Färben und Bedrucken von Textilmaterialien, Leder und vor allem Papier.

Die neuen wasserlöslichen Triazinverbindungen entsprechen der Formel I

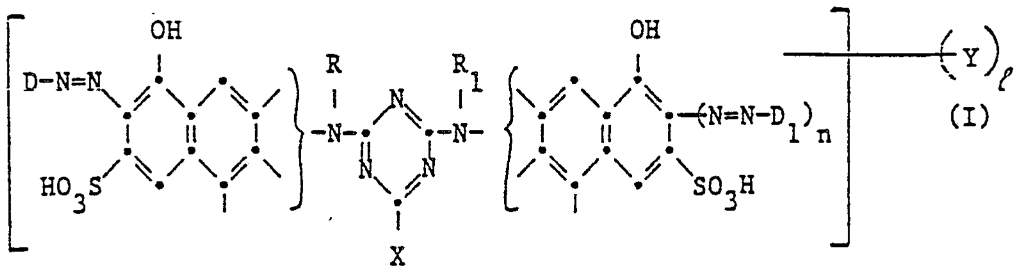

(I)

worin bedeuten :

D und $D_1$ unabhängig voneinander den Rest einer Diazokomponente,

R und $R_1$ unabhängig voneinander Wasserstoff oder $C_1$-$C_4$ Alkyl,

X eine mono- oder disubstituierte Aminogruppe, eine $C_1$-$C_4$ Alkoxygruppe oder eine Aryloxygruppe,

Y basische oder kationische Gruppen die gleich oder verschieden sein können

$\ell = 2, 3, 4, 5, 6,$

n = 0 oder 1, wobei im Molekül die Anzahl der basischen und/oder kationischen Gruppen Y gleich oder grösser als die Anzahl der $SO_3H$-Gruppen sein muss.

D und $D_1$ können gleich oder verschieden sein und stehen in der Bedeutung einer Diazokomponente für den Rest der Formel

$$D_2—(N{=}N—D_3)_m—,$$

worin

$D_2$ einen Rest der Benzol-, Naphthalin- oder heterocyclischen Reihe (z. B. Benzthiazol, Isobenzthiazol und Dibenzfuran)

$D_3$ Phenylen oder Naphthylen und

m 0 oder 1 bedeuten,

und worin $D_2$ und/oder $D_3$ substituiert sein können ; als Substituenten kommen beispielsweise in Frage : Halogen (z. B. Fluor, Chlor, Brom), $C_1$-$C_4$-Alkyl (z. B. Methyl, Aethyl, n-Propyl, iso-Propyl, n-Butyl, sec.-Butyl, tert.-Butyl), $C_1$-$C_4$-Alkoxy (z. B. Methoxy, Aethoxy, n-Propoxy, iso-Propoxy, n-Butoxy, sec.-Butoxy, tert.-Butoxy), Acetylamino, Benzoylamino, Phenoxy, $SO_3H$, CN, CO-Alkyl $C_1$-$C_4$ (z. B. Methylcarbonyl, n-Propylcarbonyl, iso-Propylcarbonyl, n-Butylcarbonyl, iso-Butylcarbonyl, und heterocyclische Ringe (z. B. Benzthiazol).

In den bevorzugten Triazinverbindungen bedeutet n = 1 und D und $D_1$ haben dieselbe Bedeutung und stellen einen Benzol- oder Azobenzolrest dar, der gegebenenfalls substituiert ist durch $C_1$-$C_4$-Alkyl, vor allem Methyl, durch $C_1$-$C_4$-Alkoxy, vor allem Methoxy und Aethoxy, durch Acetylamino und durch einen 6-Methyl-benzthiazolrest.

R und $R_1$ in der Bedeutung einer $C_1$-$C_4$-Alkylgruppe stellen beispielsweise Methyl, Aethyl, n-Propyl, iso-Propyl, n-Butyl oder sec.-Butyl dar. In den bevorzugten Triazinverbindungen der Formel I bedeutet R und $R_1$ je Wasserstoff.

X in der Bedeutung einer mono- oder disubstituierten Aminogruppe stellt z. B. dar : eine Mono- oder Di-$C_1$-$C_4$-Alkylaminogruppe worin der Alkylrest noch substituiert sein kann, beispielsweise durch OH ; eine Phenylaminogruppe, worin der Phenylrest durch eine unsubstituierte $C_1$-$C_4$-Alkylgruppe oder durch eine substituierte (z. B. durch OH) $C_1$-$C_4$-Alkylgruppe substituiert sein kann ; eine Gruppe der Formel

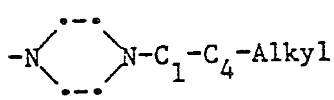

oder

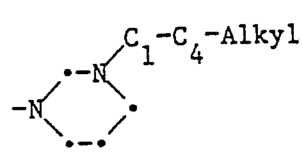

Bedeutet X eine Aryloxygruppe, so handelt es sich vor allem um die Phenoxygruppe, wobei der

Phenylrest substituiert sein kann, z. B. durch eine unsubstituierte $C_1$-$C_4$-Alkylgruppe oder durch eine substituierte (z. B. durch OH) $C_1$-$C_4$-Alkylgruppe.

Alle die im Zusammenhang mit X aufgeführten $C_1$-$C_4$-Alkylgruppen können unverzweigt oder verzweigt sein ; es handelt sich beispielsweise um die Methyl-, Aethyl-, n- und iso-Propyl-, und n-, sec.- und tert.-Butylgruppe.

Bedeutet X eine $C_1$-$C_4$-Alkoxygruppe, so kann diese unverzweigt oder verzweigt sein ; es handelt sich beispielsweise um die Methoxy-, Aethoxy-, n- und iso-Propoxy- sowie um die n-, sec.- oder tert.-Butoxygruppe.

Y in der Bedeutung einer basischen Gruppe stellt vor allem die Gruppe der Formel

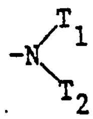

dar, worin bedeuten :

$T_1$ und $T_2$ unabhängig voneinander Wasserstoff, unsubstituiertes $C_1$-$C_4$-Alkyl oder substituiertes $C_1$-$C_4$-Alkyl, wobei als Substituenten beispielsweise in Frage kommen : OH, $C_1$-$C_4$-Alkoxy oder die

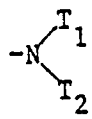 bzw. 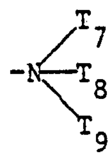 Gruppe

worin $T_7$, $T_8$ und $T_9$ die im folgenden angegebene Bedeutung hat.

$T_1$ kann aber auch mit $T_2$ unter Einschluss des Stickstoffatoms zu einem heterocyclischen Ring, beispielsweise zu einem Pyrrolidin-, Piperidin-, Morpholin- oder Piperazinring verknüpft sein.

Y in der Bedeutung einer kationischen Gruppe stellt beispielsweise folgende Gruppen dar :

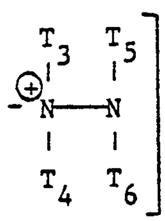 und 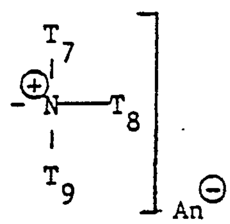

worin bedeuten :

$T_3$ und $T_4$ unabhängig voneinander $C_1$-$C_4$-Alkyl, gegebenenfalls durch $C_1$-$C_4$ Alkyl substituiertes Cycloalkyl vor allem Cyclopentyl und Cyclohexyl ;

$T_5$ und $T_6$ unabhängig voneinander Wasserstoff, $C_1$-$C_4$ Alkyl, gegebenenfalls durch $C_1$-$C_4$ Alkyl substituiertes Cycloalkyl vor allem Cyclopentyl und Cyclohexyl ;

$T_7$ $C_1$-$C_4$ Alkyl gegebenenfalls substituiert durch Phenyl, $C_1$-$C_4$ Alkylphenyl, OH, Halogen, CN oder durch die Gruppe

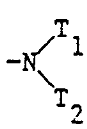 und 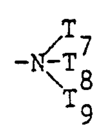

gegebenenfalls durch $C_1$-$C_4$ Alkyl substituiertes Cycloalkyl vor allem Cyclopentyl und Cyclohexyl ;

$T_8$ $C_1$-$C_4$ Alkyl gegebenenfalls substituiert durch Phenyl, $C_1$-$C_4$ Alkylphenyl, OH, Halogen, CN oder durch die Gruppe

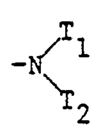 und 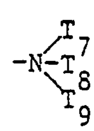

oder $T_8$ bedeutet ein gegebenenfalls durch $C_1$-$C_4$-Alkyl substituiertes Cycloalkyl vor allem Cyclopentyl oder Cyclohexyl oder eine unverzweigte oder verzweigte $C_1$-$C_4$ Alkoxygruppe.

$T_9$ $C_1$-$C_4$ Alkyl gegebenenfalls substituiert durch Phenyl, $C_1$-$C_4$ Alkylphenyl, OH, Halogen, CN oder durch die Gruppe

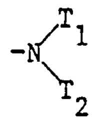 und 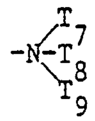

$T_7$ zusammen mit $T_8$ und $T_9$ unter Einschluss des N-Atoms einen heterocyclischen Ring, insbesondere einen gegebenenfalls substituierten Pyridiniumring oder einen Triäthylendiaminring der Formel

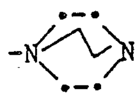

Die $C_1$-$C_4$ Alkylgruppen im Zusammenhang mit Y können unverzweigt oder verzweigt sein. Es handelt sich beispielsweise um die Methyl-, Aethyl-, n- und iso-Propyl-, n-, sec.- und tert.-Butylgruppe.

Als basische Gruppen Y sind beispielsweise genannt :

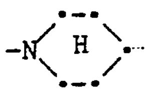 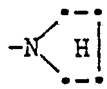 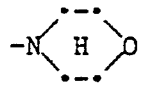

$-N(CH_3)_2$ 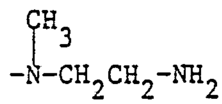

$-N(C_2H_5)_2$

$-NH-CH_3$ 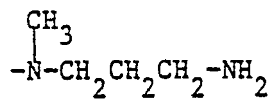

$-NH_2$

$-NH-C_3H_7$ 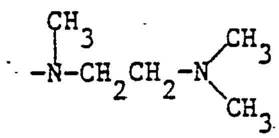

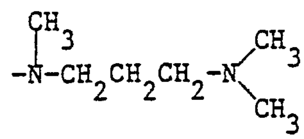

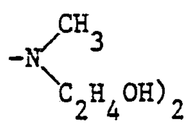

$-N(C_2H_4OH)_2$

Als kationische Gruppen Y sind beispielsweise genannt :

$-\overset{\oplus}{N}(CH_3)_3$ 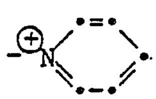 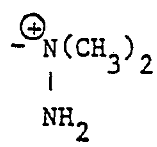

$-\overset{\oplus}{N}(C_2H_5)_3$ 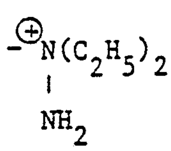 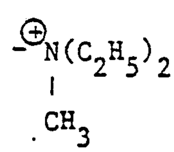

(Fortsetzung)

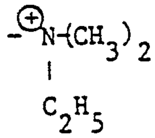

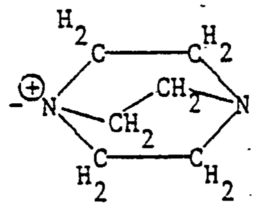

$-^{\oplus}N(C_2H_4OH)_3$

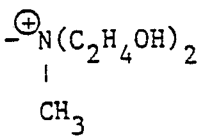

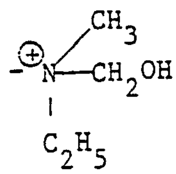

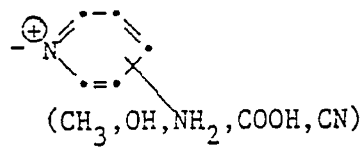

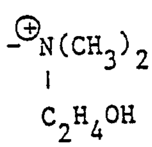

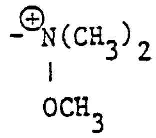

In besonders interessanten Triazinverbindungen der Formel I bedeutet Y als basische Gruppe die $-NH_2$, $-N(CH_3)_2$ oder die $-N(C_2H_5)_2$-Gruppe und als kationische Gruppe $-^{\oplus}N(CH_3)_3$ oder die Pyridiniumgruppe.

Die basischen bzw. kationischen Gruppen Y können in D, $D_1$ bzw. $D_2$ und $D_3$ sowie insbesondere in X lokalisiert sein ; dabei können die basischen Aminogruppen und kationischen Ammoniumgruppen z. B. an einem Alkylrest, einem heterocyclischen Rest oder an einem Arylrest gebunden sein, während die kationischen Pyridin- und Hydrazinreste vorzugsweise an einen Alkylrest gebunden sind.

In den bevorzugten Triazinverbindungen der Formel I ist ein Rest Y in X lokalisiert. Die daraus resultierende Kombination —X—Y stellt vorallem ein aliphatisches, aromatisches, araliphatisches und heterocyclisches Diamin dar ; beispielsweise handelt es sich um folgende —X—Y Kombinationen :

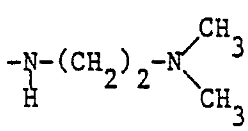 , 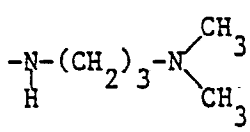 , 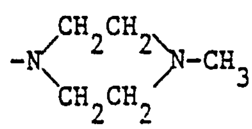

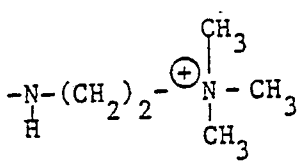 , 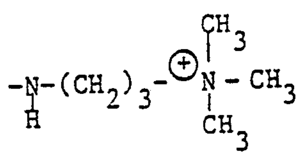 , 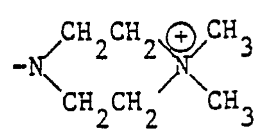

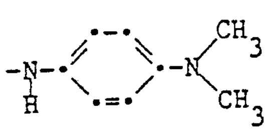 , 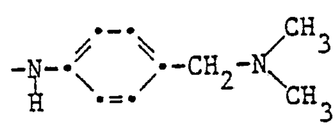 ,

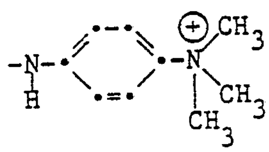 , 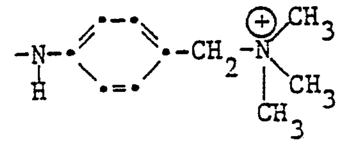 ,

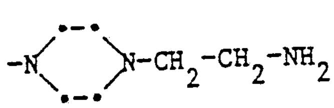 , $-N[(CH_2)_3-NH_2]_2$ ,

(Fortsetzung)

$-N[(CH_2)_2-NH_2]_2$ , 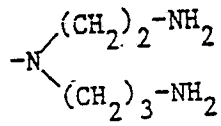

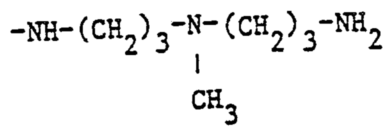 , 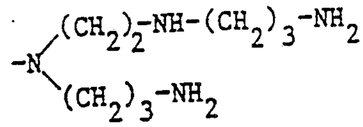

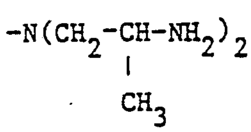 , 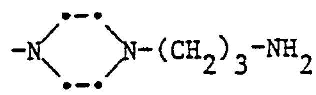

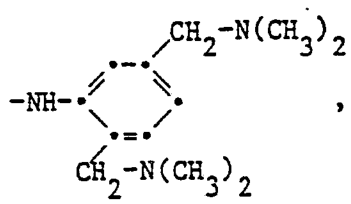 , 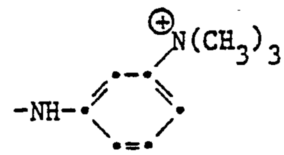

Als Anionen An kommen sowohl anorganische wie organische Anionen in Frage ; beispielsweise sind genannt : Halogen, wie Chlorid-, Bromid- oder Jodid-, Sulfat-, Methylsulfat-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Formiat-, Acetat-, Propionat-, Lactat-, Succinat-, Chloracetat-, Tartrat-, Methansulfonat- oder Benzoationen oder komplexe Anionen wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate oder Acetate vor. Die Anionen können in bekannter Weise gegen andere Anionen ausgetauscht werden.

Die neuen Triazinverbindungen der Formel I werden nach bekannter Art und Weise hergestellt, beispielsweise, indem man ein Amin der Formel II

$NH_2$—D (II) und gegebenenfalls IIa $NH_2$—$D_1$ (IIa)

diazotiert und auf eine Verbindung der Formel III

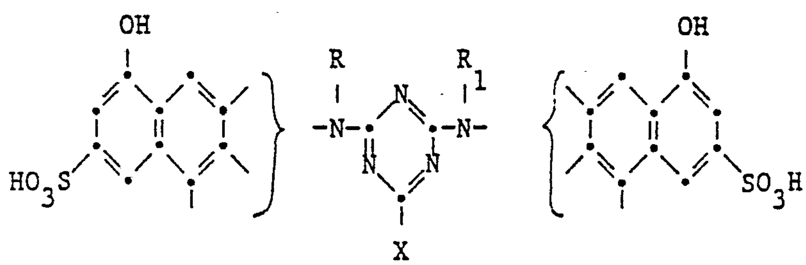

kuppelt, wobei die basische und/oder kationische Gruppe Y im Rest D, $D_1$ und/oder X lokalisiert ist und die Symbole D, $D_1$, R, X, $R_1$ und Y im übrigen die angegebene Bedeutung haben.

Die Amine der Formel II und IIa sind bekannt und können nach bekannten Methoden hergestellt werden.

Ebenso erfolgt die Diazotierung und Kupplung nach bekannter Art und Weise ; so erfolgt beispielsweise die Kupplung vorzugsweise in saurer, neutraler oder schwach alkalischer Lösung ; die Kupplungstemperatur liegt insbesondere zwischen 0° und 50 °C.

Verbindungen der Formel III erhält man beispielsweise, wenn man 2 Mol I-Säure, G-Säure und/oder M-Säure mit 1 Mol Cyanurhalogenid, insbesondere Cyanurchlorid umsetzt und die erhaltene Monochlortriazinverbindung mit einer X oder X-Y einführenden Verbindung umsetzt. Selbstverständlich können die

einzelnen Schritte auch vertauscht werden und beispielsweise zuerst die X bzw. X-Y einführenden Verbindung mit dem Cyanurhalogenid kondensiert werden.

Aus der grossen Vielzahl der X bzw. X-Y einführenden Verbindungen seien beispielsweise genannt :

N-(2-Aminoäthyl)-piperazin,
Dipropylentriamin,
Diäthylentriamin,
(Aminoäthyl)-(aminopropyl)-amin,
N-(3-Aminopropyl)-piperazin,
Diisopropylentriamin,
2,5-Bis-(dimethylaminomethyl)-anilin,
3-Aminophenyl-trimethyl-ammoniumchlorid,
Dimethylaminopropylamin,
Dimethylaminoäthylamin,
N,N-Dimethyl-4-aminobenzylamin,
Dimethylamin,
Aethanolamin,
Diäthanolamin,
Propanolamin und
Dipropanolamin.

Die Triazinverbindungen der Formel I werden sowohl als Pulver- bzw. Granulat-Präparationen als auch in Form von konzentrierten Lösungen zum Einsatz gebracht. Pulver-Präparationen werden in üblicher Weise mit Stellmaterialien wie Natriumsulfat, -phosphat, -chlorid, -acetat in Gegenwart von Entstaubungsmitteln eingestellt, oder die Triazinverbindungen werden direkt als Sprühtrocknungspräparationen in den Handel gebracht. Konzentrierte Farbstofflösungen können wässriger oder wässrig/organischer Art sein, wobei übliche, umweltfreundliche und möglichst gut abbaubare Zusätze bevorzugt werden wie organische Säuren, vorzugsweise Essigsäure, Ameisensäure, Milchsäure, Zitronensäure, Amide wie Formamid, Dimethylformamid, Harnstoff, Alkohole wie Glykol, Diglykol, Diglykoläther, vorzugsweise Methyl- oder Aethyläther.

Verwendung finden die wasserlöslichen Triazinverbindungen der Formel I vor allem als Farbstoffe zum Färben und Bedrucken von natürlichen und synthetischen kationisch anfärbbaren Substraten, vor allem von Papier, Halbkartons und Kartons in der Masse und in der Oberfläche, sowie von Textilmaterialien, die z. B. vorteilhaft aus Homo- oder Mischpolymerisaten des Acrylnitrils bestehen oder synthetische Polyamide oder Polyester, welche durch saure Gruppen modifiziert sind. Man färbt diese Textilmaterialien vorzugsweise in wässrigem, neutralem oder saurem Medium nach dem Ausziehverfahren, gegebenenfalls unter Druck oder nach dem Kontinueverfahren. Das Textilmaterial kann dabei in verschiedenartigster Form vorliegen, beispielsweise als Faser, Faden, Gewebe, Gewirke, Stückware und Fertigware wie Hemden oder Pullover.

Mit den erfindungsgemässen Farbstoffen lassen sich egale Färbungen bzw. Drucke herstellen, die sich durch sehr gute Allgemeinechtheiten vor allem einem sehr hohen Ausziehgrad und gute Wasserechtheiten auszeichnen.

Des weiteren können die neuen Triazinverbindungen der Formel I auch zum Färben und Bedrucken von natürlichen und regenerierten Cellulosematerialien, vor allem von Baumwolle und Viscose verwendet werden, wobei man ebenfalls farbstarke Ausfärbungen erhält.

Die neuen Triazinverbindungen der Formel I haben auf diesen Textilmaterialien ein gutes Ziehvermögen, einen guten Ausziehgrad und die erhaltenen Färbungen weisen sehr gute Echtheiten, vor allem Nassechtheiten auf.

Desweiteren dienen die neuen Disazoverbindungen zum Färben von Polyacrylnitrilmaterialien in der Spinnmasse, und zum Färben von Polyacrylnitril-Nasskabel. Sie können auch für Stempelfarben und im Jet-Printing eingesetzt werden.

Eine bevorzugte Verwendung der neuen Triazinverbindungen der Formel I liegt in der Anwendung zum Färben von Papier aller Arten, vor allem von gebleichtem, ungeleimtem und geleimtem ligninfreiem Papier, wobei von gebleichtem oder ungebleichtem. Zellstoff ausgegangen werden kann und Laub- oder Nadelholz-Zellstoff, wie Birken- und/oder Kiefernsulfid- und/oder Sulfat-Zellstoff verwendet werden kann. Ganz besonders geeignet sind diese Verbindungen zum Färben von ungeleimtem Papier (z. B. Servietten, Tischdecken, hygienischen Papieren) als Folge ihrer sehr hohen Affinität zu diesem Substrat.

Die neuen Triazinverbindungen der Formel I ziehen auf diese Substrate sehr gut auf, wobei die Abwasser farblos bleiben, was ein grosser ökologischer Vorteil insbesondere im Hinblick auf die heutigen Abwasser-Gesetze ist.

Die erhaltenen Färbungen zeichnen sich durch gute Allgemeinechtheiten aus, wie einer guten Lichtechtheit bei gleichzeitig hoher Klarheit und Farbstärke und Nassechtheit, d. h. sie zeigen keine Neigung zum Ausbluten, wenn gefärbtes Papier in nassem Zustand mit feuchtem weissem Papier in Berührung gebracht wird. Darüber hinaus weisen sie eine gute Alaun-, Säure- und Alkali-Echtheit auf. Die Nassechtheit bezieht sich nicht nur auf Wasser, sondern auch auf Milch, Fruchtsäfte und gesüsste

Mineralwasser ; wegen ihrer guten Alkoholechtheit sind sie auch gegen alkoholische Getränke beständig. Diese Eigenschaft ist z. B. besonders für Servietten und Tischdecken erwünscht, bei denen vorhersehbar ist, dass das gefärbte Papier in nassem Zustand (z. B. getränkt mit Wasser, Alkohol, Tensid-Lösung etc...) in Berührung mit anderen Flächen wie Textilien, Papier und dergleichen kommt, die gegen Verschmutzung geschützt werden müssen.

Die hohe Affinität für Papier und die grosse Ausziehgeschwindigkeit der neuen Farbstoffe ist für das Kontinue-Färben von Papier von grossem Vorteil.

Schlussendlich können die neuen Triazinverbindungen der Formel I noch zum Färben von Leder (durch z. B. Sprühen, Bürsten und Tauchen) und zur Bereitung von Tinten verwendet werden.

Die GB-A-2 007 250 zeigt sulfogruppenhaltige substantive Disazofarbstoffe mit einem ähnlichen Grundgerüst wie die erfindungsgemässen Farbstoffe. Es sind jedoch keine Farbstoffe offenbart, welche basische oder kationische Gruppen enthalten, wobei die Anzahl dieser Gruppen gleich oder grösser ist, als die Anzahl der Sulfogruppen.

Die folgenden Beispiele veranschaulichen die Erfindung, ohne sie darauf zu limitieren. Teile (T) sind — sofern nichts anderes angegeben — Gewichtsteile und die Temperaturen sind in Grad Celsius angegeben.

Herstellung der Ausgangsprodukte

## Beispiel 1

48 Teile I-Säure werden in 700 Teilen Wasser suspendiert und die Suspension mit 30 %iger wässriger Natriumhydroxydlösung auf pH 7 gestellt, wobei eine klare Lösung entsteht. Diese Lösung wird auf 5° abgekühlt und dazu eine Lösung von 18,5 Teilen Cyanurchlorid in 100 Vol.Teilen Aceton getropft. Durch die Kondensation freiwerdende Säure wird mit 2N-Natriumhydroxydlösung langsam neutralisiert und ein pH von ca. 6 gehalten. Die Kühlung wird entfernt und die Temperatur von dem Kondensationsgemisch auf Raumtemperatur steigen gelassen. Anschliessend wird zur Vervollständigung der Reaktion das Gemisch auf 40-45° erwärmt und gerührt bis I-Säure nicht mehr nachweisbar ist. (Prüfung durch Diazotierung und Kupplung auf R-Salzlösung). Zu dieser Lösung von der Monochlorverbindung werden 15 Teile N-(2-Aminoäthyl)-piperazin zugefügt, das Reaktionsgemisch auf 80° geheizt und während 6 Stunden bei dieser Temperatur gerührt. Nach beendeter Kondensation erhält man die Kupplungskomponente der Formel

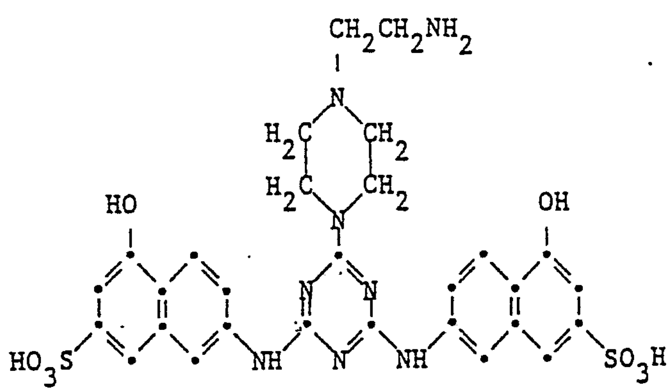

(KI)

als Aminsalz.

Verwendet man anstelle von N-(2-Aminoäthyl)-piperazin die gleiche Menge Di-(3-aminopropyl)-amin, bei im übrigen gleicher Arbeitsweise, so erhält man die Verbindung der Formel

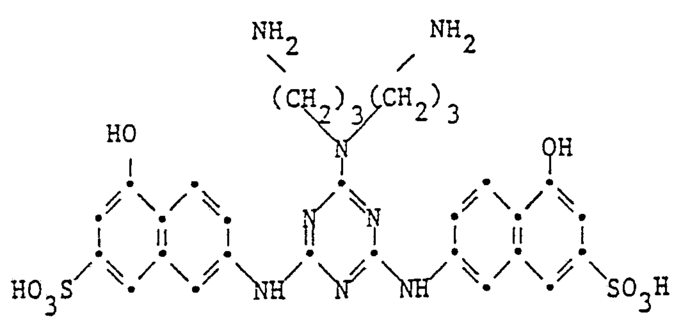

(KII)

Beispiel 2

71,7 Teile 2-Amino-5-naphthol-7-sulfonsäure werden in 1 050 Teile Wasser suspendiert und mit Natronlauge auf pH 7,0 gestellt. Dazu werden bei 10° innert 25 Minuten 28,5 Teile Cyanurchlorid, gelöst in 120 Teilen Aceton, zugetropft und 2 Stunden bei 0°-10 °C nachgerührt. Danach wird der pH mit 2N Natronlauge auf 6,7 gestellt und weitere 4 Stunden bei Raumtemperatur sowie 1 Stunde bei 40°-45° weitergerührt, wobei der pH bei 6,7 gehalten wird.

Nach einer Klarfiltration fügt man 45,9 Teile 3-Dimethylamino-1-propylamin zu, erwärmt die Lösung auf 90°-95° und hält diese Temperatur 1 Stunde lang. Man erhält 1 380 Teile einer dunklen Lösung, welche direkt als Kupplungskomponente eingesetzt werden kann und 101 Teile der Verbindung der Formel

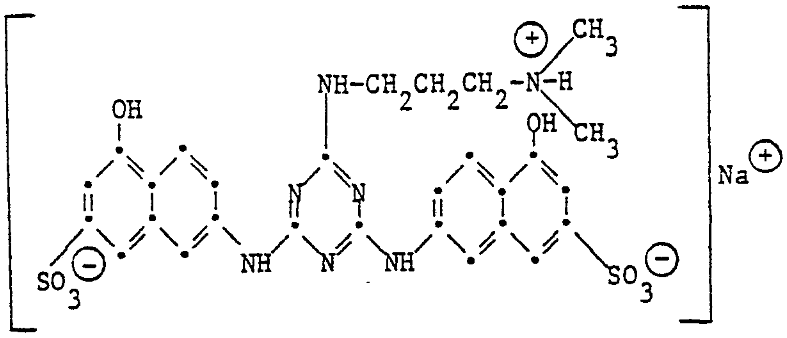

enthält.

Beispiel 3

Verwendet man in Beispiel 2 statt 45,9 Teile 3-Dimethylamino-1-propylamin 33,8 Teile 3-Aminopropanol, so erhält man die Verbindung der Formel

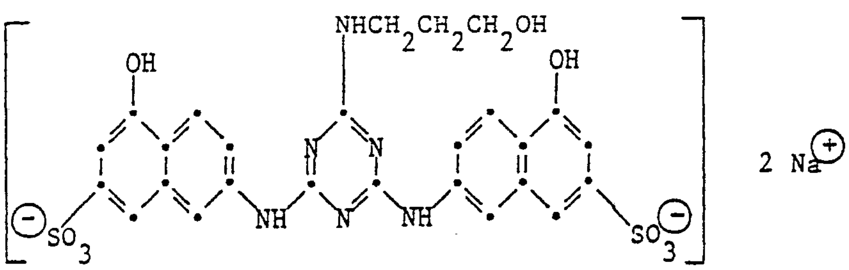

als dunkle Lösung.

Beispiel 4

Man verfährt wie in Beispiel 2, setzt jedoch statt 45,9 Teile 3-Dimethylamino-1-propylamin 30,8 Teile 4-Aminophenyl-trimethylammoniumchlorid ein und stellt den pH auf 10.

Man erhält eine bräunliche Lösung, die die Verbindung der Formel

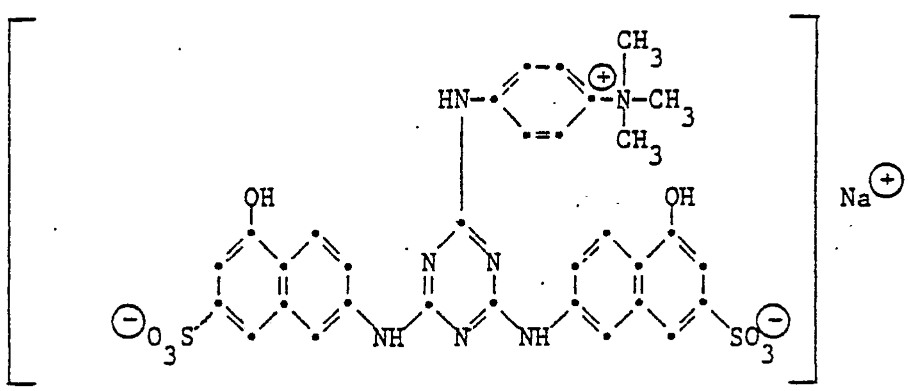

enthält.

Setzt man statt 4-Aminophenyl-trimethylammoniumchlorid das entsprechende 3-Amino-Isomere ein, so erhält man die Verbindung der Formel

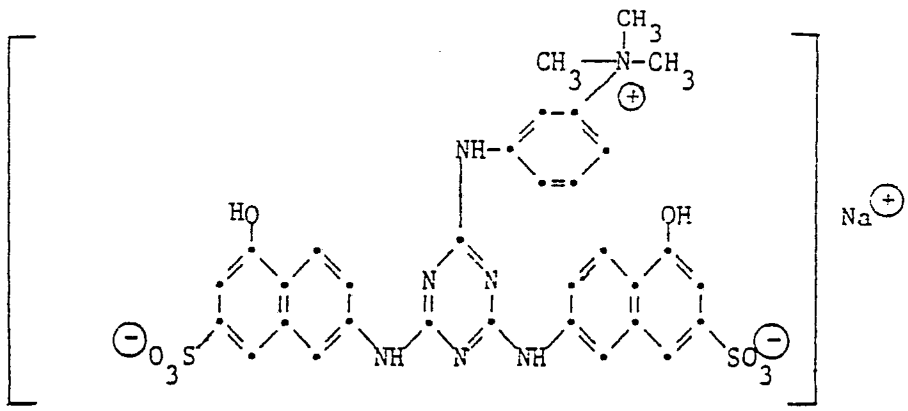

## Beispiel 5

Ersetzt man in Beispiel 2 die 45,9 Teile 3-Dimethylamino-1-propylamin durch 23,7 Teile 4-Amino-N,N-dimethylbenzylamin bei im übrigen gleicher Arbeitsweise, so erhält man die Verbindung der Formel

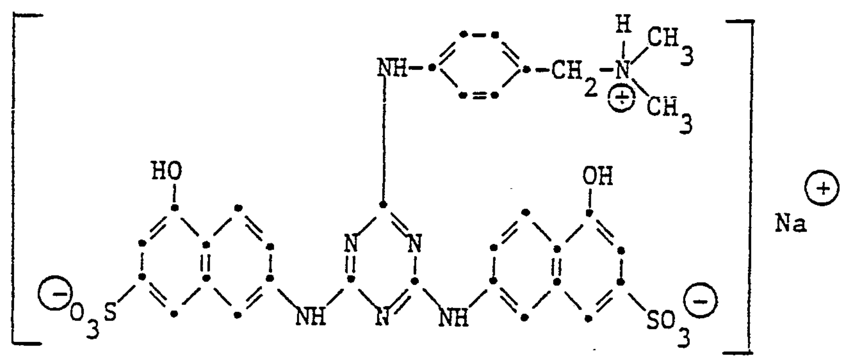

in Form einer bräunliche Lösung.

## Beispiel 6

Verwendet man in Beispiel 2 statt der 45,9 Teile 3-Dimethylamino-1-propylamin 43,5 Teile 4-Amino-N,N,N-trimethyl-benzylammoniummethosulfat, so erhält man die Verbindung der Formel

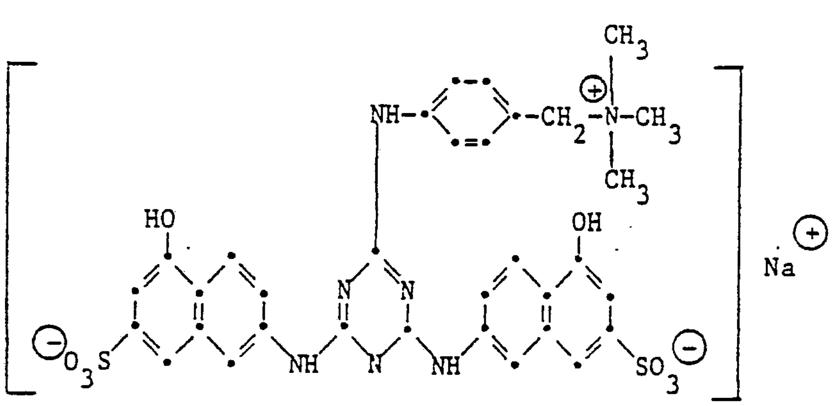

Herstellung der Endprodukte

Beispiel 7

15 Teile 4-Aminobenzyldimethylamin werden in 200 Teilen Wasser und 50 Teilen konzentrierter Salzsäure gelöst. Die Lösung wird durch Zugabe von 25 Vol.-Teilen 4N-Natriumnitritlösung bei 0-5° diazotiert. Die überschüssige salpetrige Säure wird mit Sulfaminsäure zerstört.

Eine Lösung enthaltend 34,1 Teile der Kupplungskomponente KI gemäss Beispiel 1 wird mit Salzsäure auf pH 5 gestellt und auf 0-5° abgekühlt. Die eiskalte Diazoniumlösung wird zugegeben und der pH des Kupplungsgemisches mit Natriumhydroxydlösung auf 5 gestellt. Nach beendeter Kupplung wird der Farbstoff der Formel

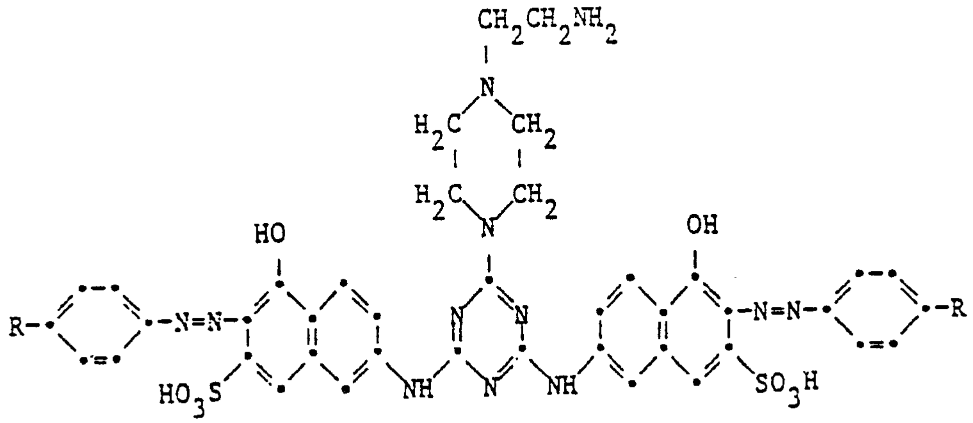

$R = -CH_2N(CH_3)_2$

durch Aussalzen isoliert. Er löst sich in Wasser mit oranger Farbe und färbt Papiermasse in orangen Tönen. Das Abwasser ist farblos.

Beispiel 8

Verfährt man analog der Arbeitsweise des Beispiels 7 verwendet jedoch 18 Teile 4-Dimethylaminoäthoxyanilin, als Diazokomponente und 34,2 Teile der Kupplungskomponente KII, gemäss Beispiel 1, so erhält man den Farbstoff der Formel

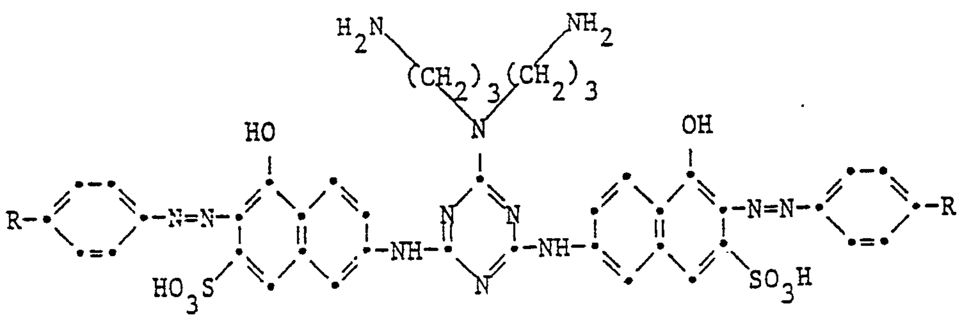

$R = O-CH_2-CH_2-N(CH_3)_2$

Dieser färbt Papiermasse in roten Tönen, wobei das Abwasser farblos ist.

Weitere Farbstoffe gemäss der folgenden Tabelle werden erhalten, wenn man bei im übrigen gleicher Arbeitsweise die jeweiligen Diazokomponenten mit der Kupplungskomponente kuppelt. Die erhaltenen Farbstoffe färben Papier in orange bis violetten Farbtönen an.

(Siehe Tabelle Seite 12 ff.)

Tabelle

| Bsp. | Farbstoff |
|---|---|
| 9 | 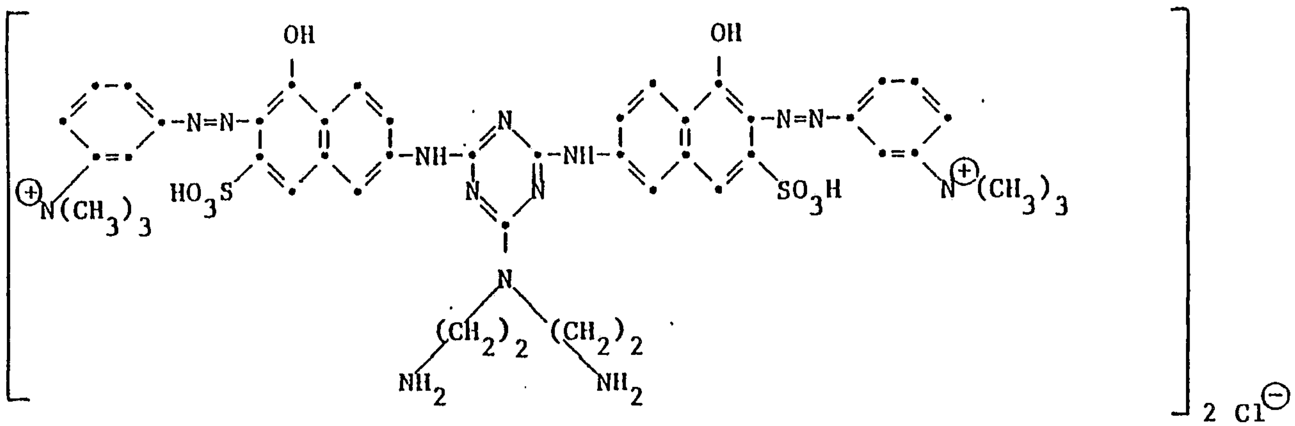 |
| 10 | 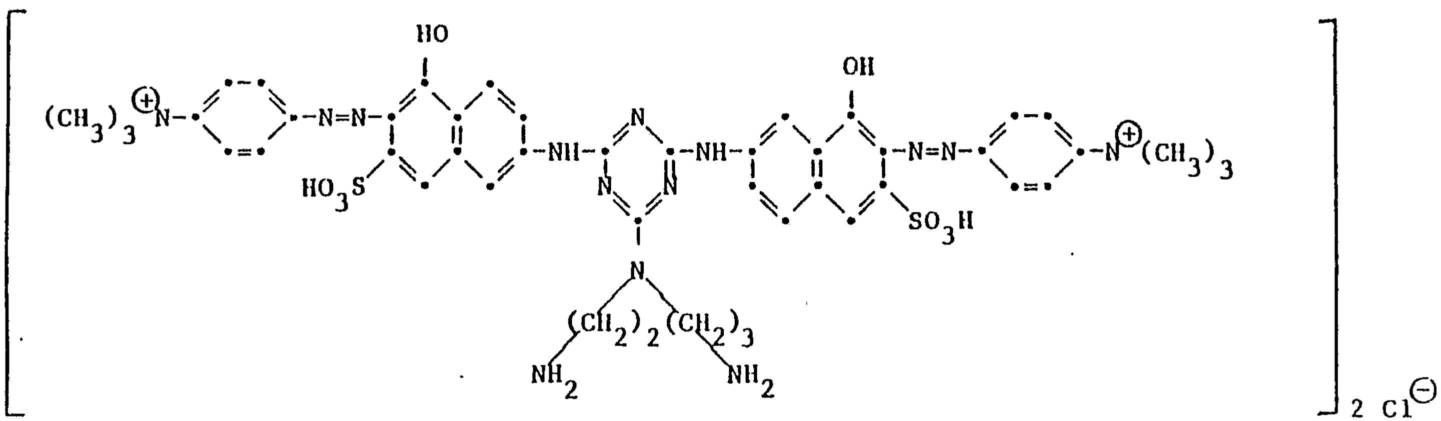 |

Tabelle (Fortsetzung)

| Bsp. | Farbstoff |
|---|---|
| 11 | 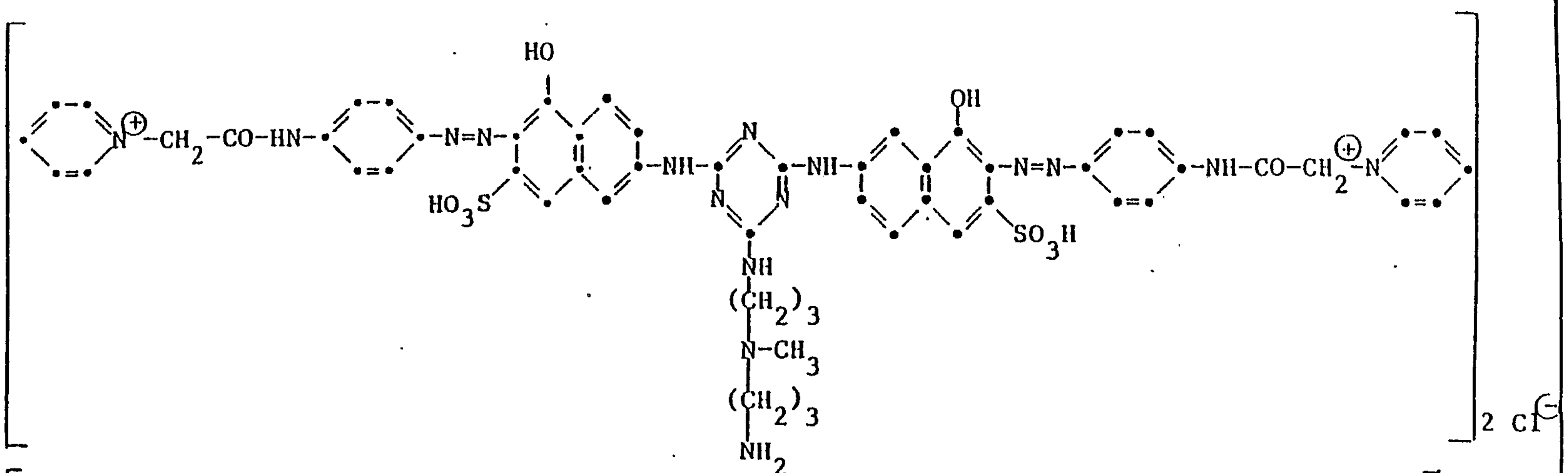 |
| 12 | 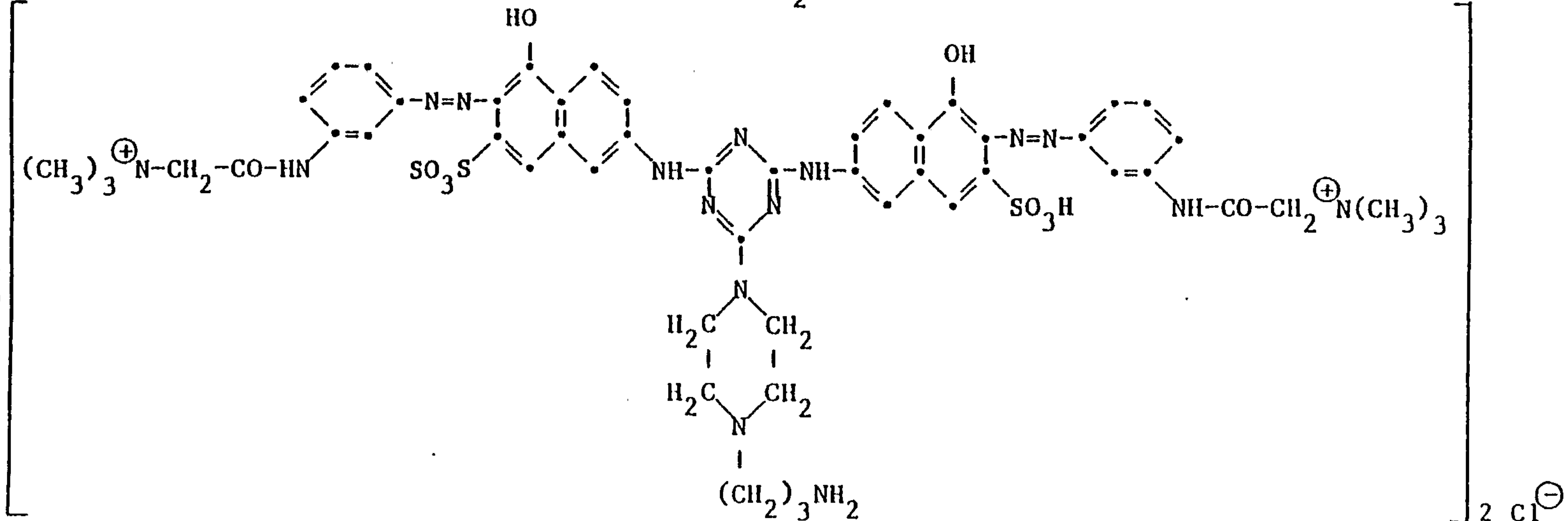 |

Tabelle (Fortsetzung)

| Bsp. | Farbstoff |
| --- | --- |
| 13 | 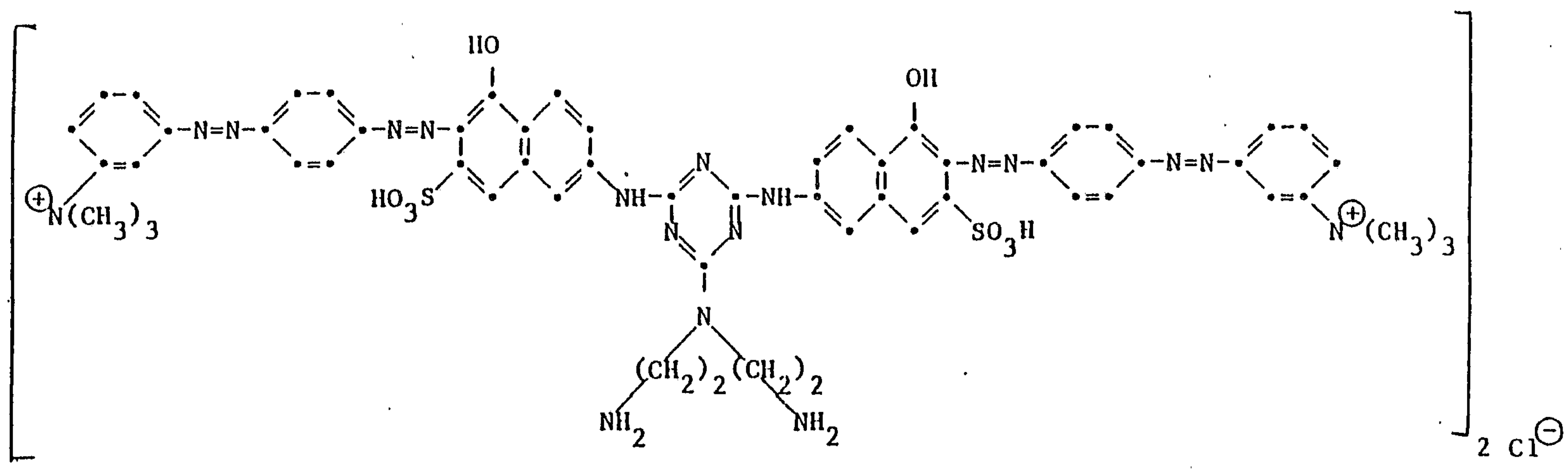 |
| 14 | 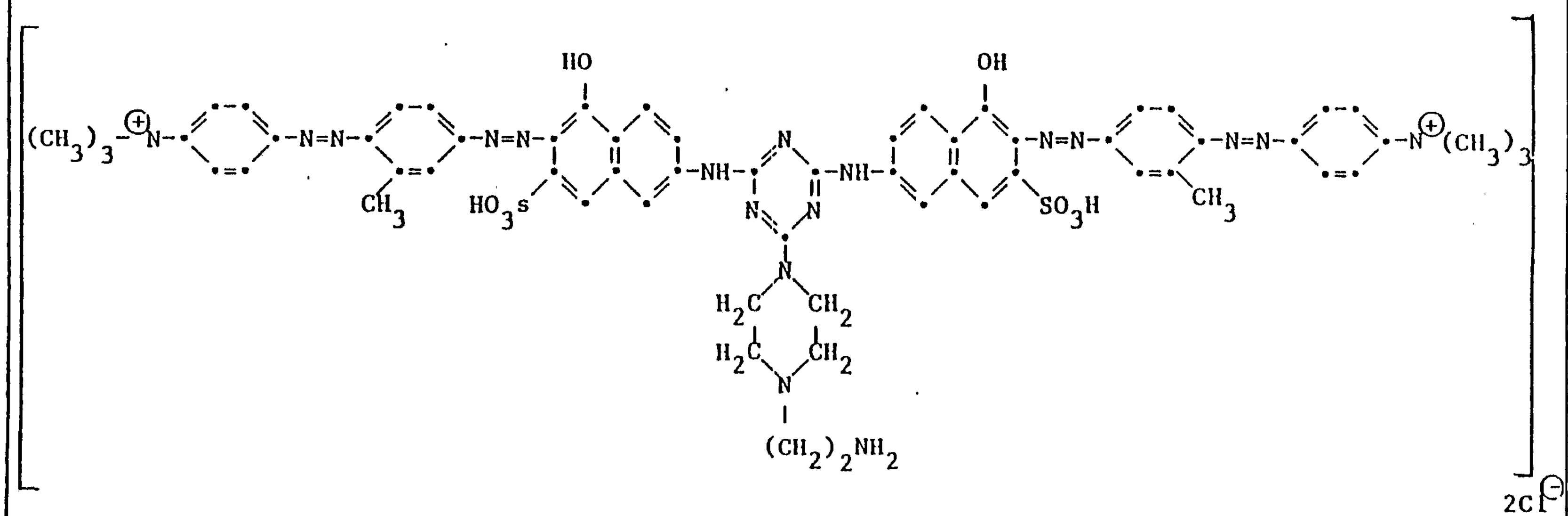 |

Tabelle (Fortsetzung)

| Bsp. | Farbstoff |
| --- | --- |
| 15 | 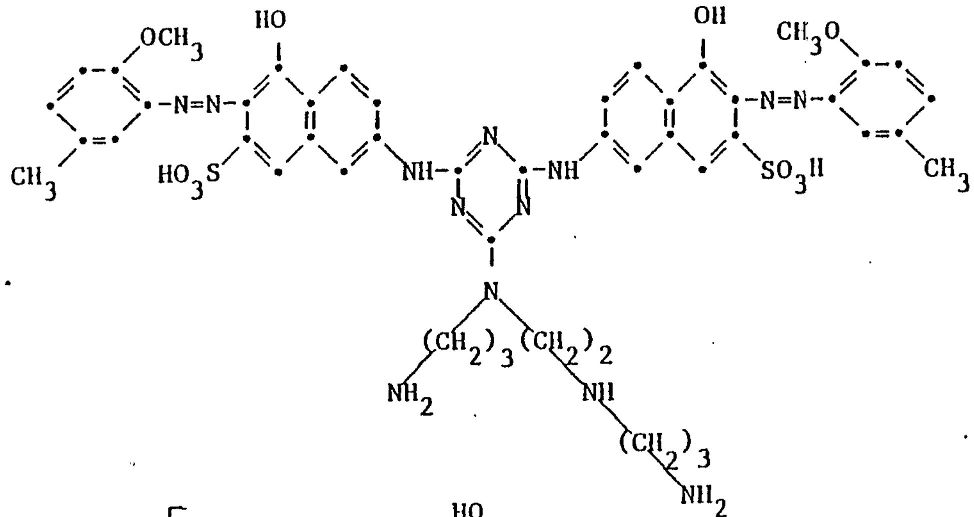 |
| 16 | 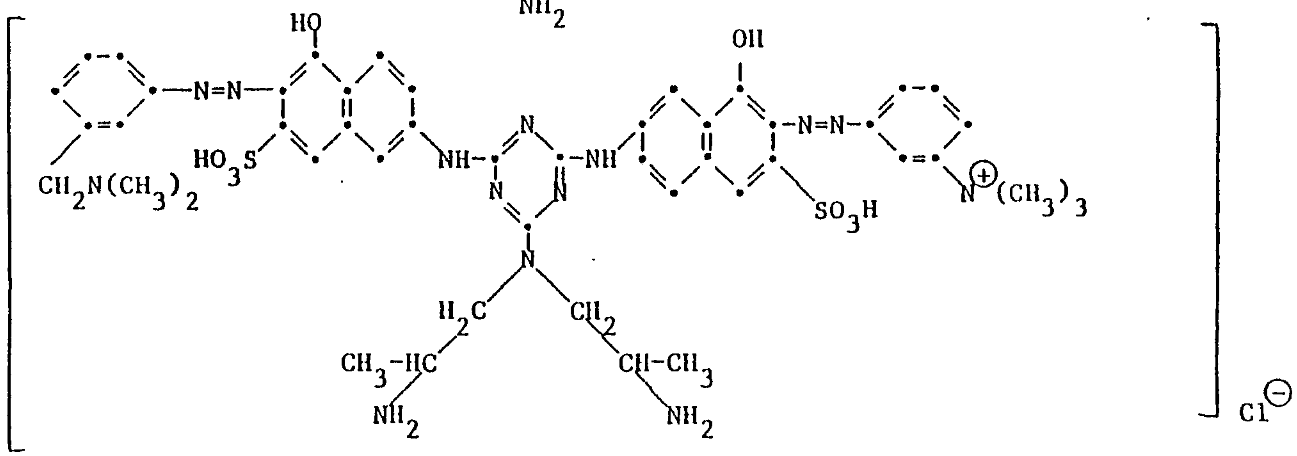 |

Tabelle (Fortsetzung)

| Bsp. | Farbstoff |
|---|---|
| 17 | 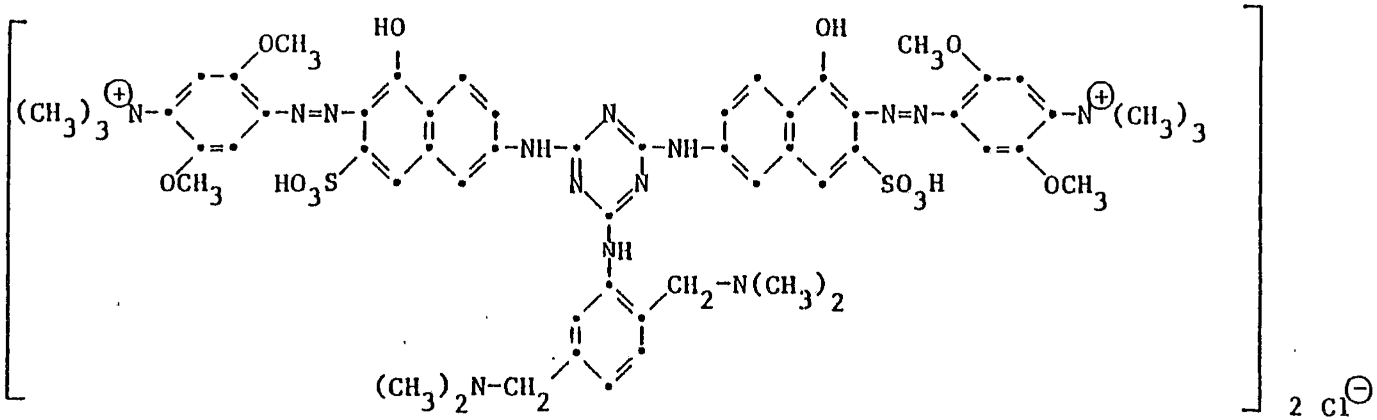 |
| 18 | 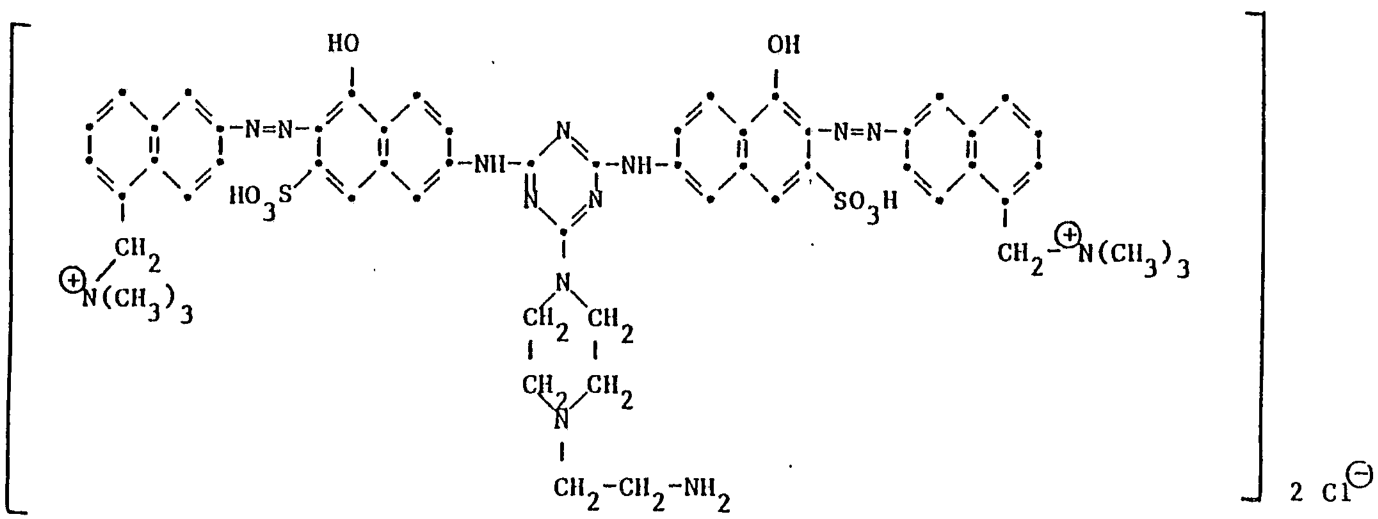 |

Tabelle (Fortsetzung)

| Bsp | Farbstoff |
|---|---|
| 19 | 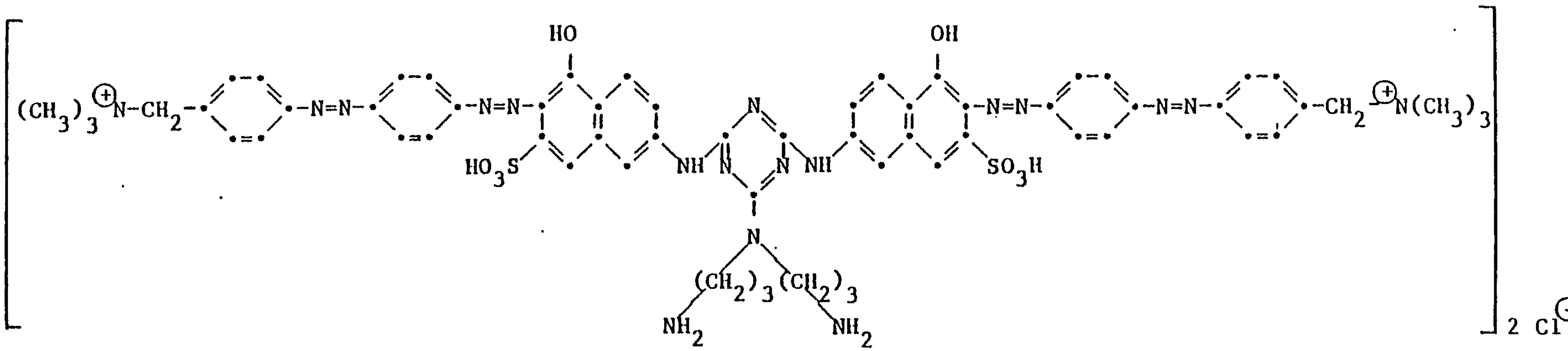 |
| 20 | 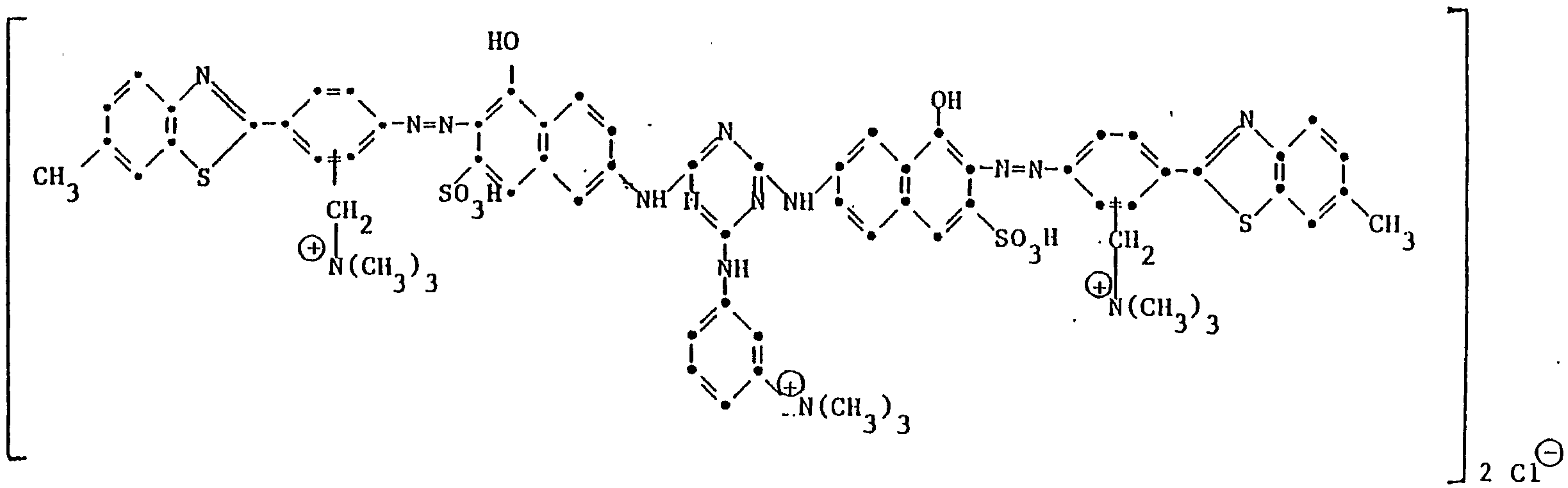 |

Beispiel 21

1,8 Teile der Verbindung

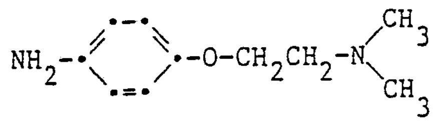

(≙ 0,01 Mol) werden in 30 Teilen Wasser gelöst, auf 0°-5° gekühlt und mit 7,2 Teilen 30 %iger Salzsäure sowie 10 ml 1N Natriumnitritlösung versetzt und 1/2 Stunde verrührt.

In einem weiteren Gefäss werden 46 Teile der unter Beispiel 2 erhaltenen Lösung (≙ 0,005 Mol) mit Salzsäure auf pH 2,5 gestellt und anschliessend die oben beschriebene Diazolösung zugetropft. Man erhöht den pH mit Natronlauge auf 2,5-3,0 und rührt die dunkelrote Suspension 3 Stunden nach. Durch weiteren Zusatz von Natronlauge wird der pH auf 7,0 gestellt, nochmals 1 Stunde nachgerührt; anschliessend abgenutscht und der Rückstand getrocknet. Man erhält so 6,0 Teile rotbraunes Pulver der Formel

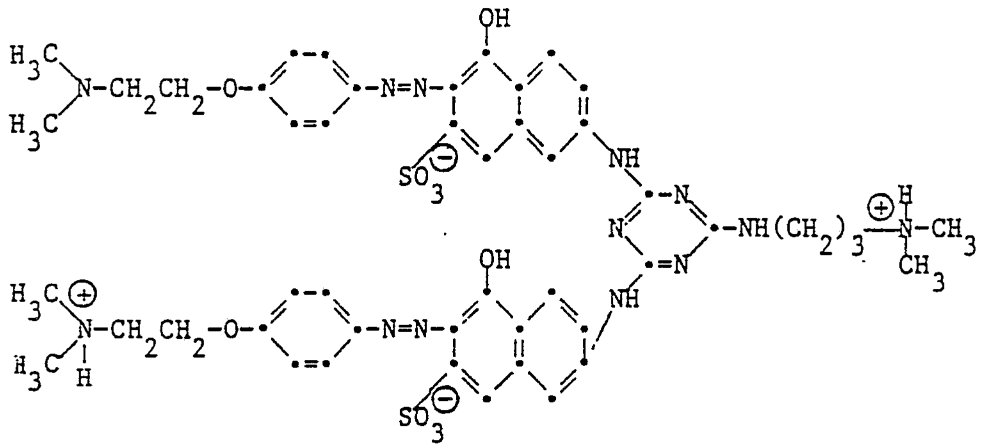

Das Produkt ist ausgezeichnet wasserlöslich und färbt Papier in roten Tönen, wobei das Abwasser praktisch farblos ist.

Beispiel 22

Diazotiert man analog Beispiel 21 2,3 Teile der Verbindung

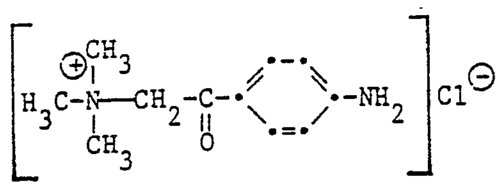

und kuppelt das Diazoniumsalz bei pH 2,5-3,0 auf 46 Teile der in Beispiel 2 beschriebenen Lösung während 5 Stunden bei Raumtemperatur, so erhält man 6,3 Teile des Farbstoffes der Formel

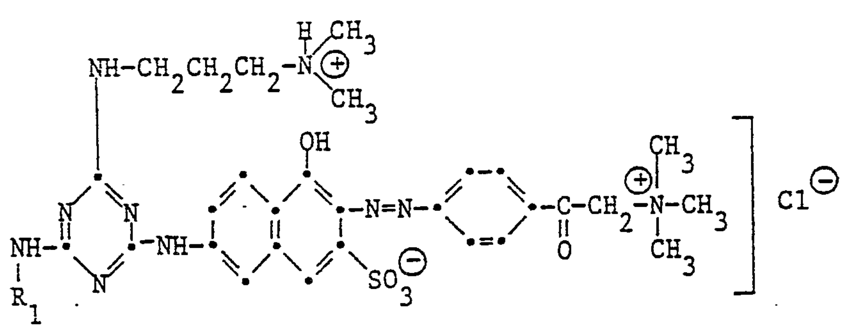

$R_1$ = 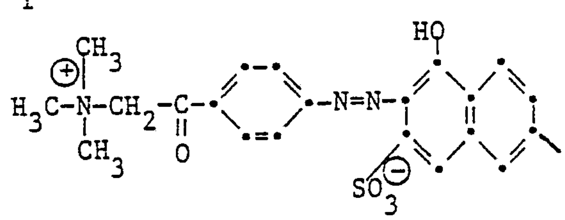

Dieser färbt Papier mit rotoranger Nuance und praktisch farblosen Abwässern.

Verfährt man analog, verwendet aber äquivalente Teile der in folgender Tabelle, Kolonne II angegebenen Diazokomponente, so erhält man Farbstoffe deren Nuance auf Papier aus Kolonne III ersichtlich ist.

| I | II | III |
|---|---|---|
| Beisp. Nr. | Diazokomponente | Farbton auf Papier |
| 23 | 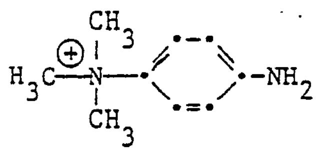 | gelborange |
| 24 | 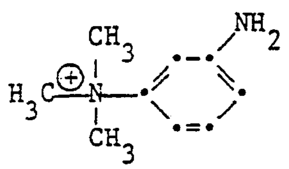 | gelborange |
| 25 | 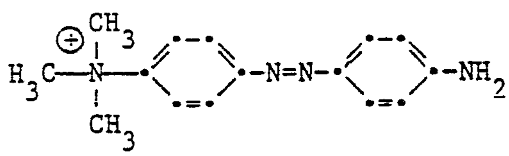 | rotviolett |
| 26 | 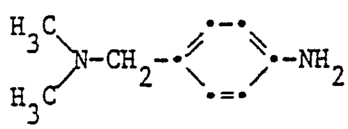 | rotorange |
| 27 | 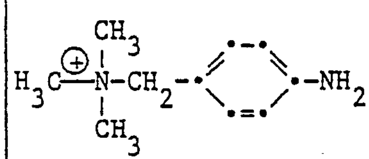 | rotorange |
| 28 | 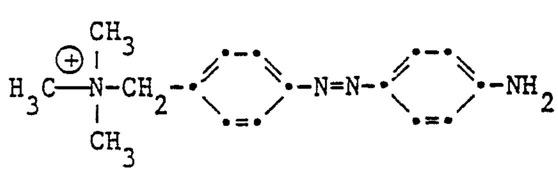 | violett |

Beispiel 29

Ersetzt man in Beispiel 21 die dort angegebene Kupplungskomponente durch 46 Teile der Lösung aus Beispiel 3, so erhält man 5,5 Teile des Farbstoffes der Formel

(Siehe Formel Seite 20 f.)

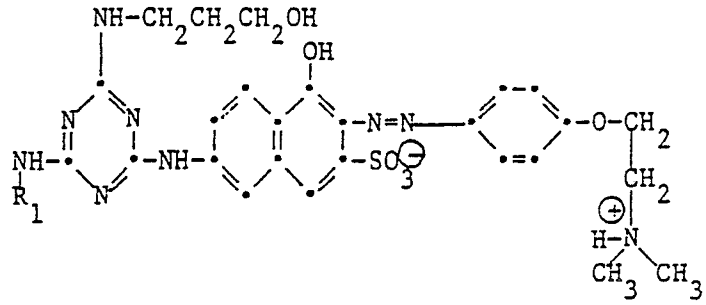

$R_1$ = 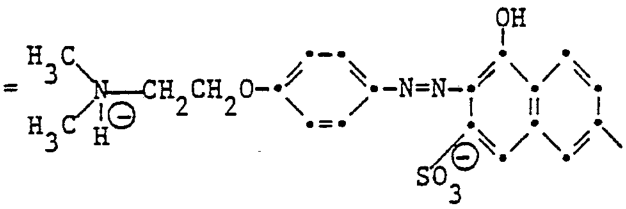

Dieser lässt sich wässrig mit 1 Aequivalent Natronlauge in Lösung bringen und eignet sich vorzüglich zum Färben von Papier in roten Tönen, wobei das Abwasser farblos ist selbst bei der Verwendung von Weichwasser.

Beispiel 30

Ersetzt man die im Beispiel 21 angegebene Kupplungskomponente durch 46 Teile der Lösung aus Beispiel 5, so erhält man 4,8 Teile des Farbstoffes der Formel

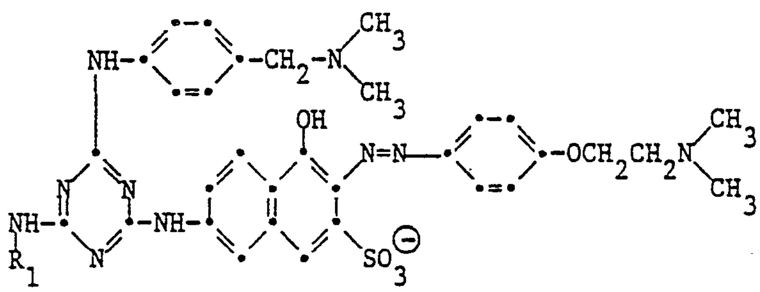

$R_1$ = 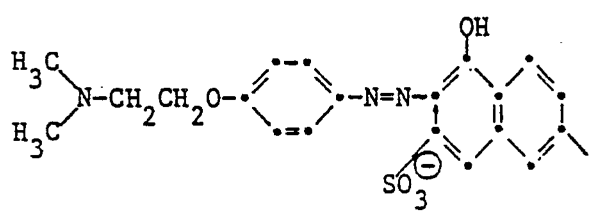

Dieser lässt sich mit verdünnter Natronlauge in Lösung bringen und färbt Papier in roten Nuancen mit ausgezeichneten Abwasserwerten.

Anwendung

Beispiel 31

Man vermischt 50 Teile chemisch gebleichte Buche-Sulfit mit 50 Teilen gebleichtem RKN 15 (Mahlgrad 22° SR) und 2 Teile des Farbstoffes gemäss Beispiel 7 in Wasser (pH 6, Wasserhärte 10° dH, Temperatur 20°, Flottenverhältnis 1 : 40). Nach 15-minütigem Rühren werden Papierblätter auf einem Frank-Blattbildner hergestellt.

Das Papier ist in einer sehr intensiven Rotnuance gefärbt. Das Abwasser ist völlig farblos. Der Ausziehgrad erreicht praktisch 100 %. Die Nassechtheiten und Lichtechtheiten sind ausgezeichnet.

Beispiel 32

Es wird eine Papierbahn aus gebleichtem Buche-Sulfit (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 7 unter starker Turbulenz dem Dünnstoff kontinuierlich zudosiert (0,5 %ige Färbung, Flottenverhältnis 1 : 400, Wasserhärte 10° dH, pH 6, Temperatur 20°).

Es entsteht auf der Papierbahn eine farbstarke Rotnuance von mittlerer Intensität. Das Abwasser ist völlig farblos.

Beispiel 33

10 Teile Baumwollgewebe (gebleichte mercerisierte Baumwolle) werden in einem Labor-Baumfärbeapparat in 200 Teile einer Flotte (Wasserhärte 10° dH, pH 4, 3 Umwälzungen der Färbeflotte pro Minute) die 0.05 Teile des Farbstoffes gemäss Beispiel 7 enthält gefärbt. Die Temperatur wird in 60 Minuten von 20° auf 100° aufgeheizt, dann während 15 Minuten konstant gehalten.

Die Färbeflotte ist völlig ausgezogen. Es entsteht auf dem Baumwollgewebe eine farbstarke rote Färbung, welche sich durch eine gute Lichtechtheit und eine sehr gute Nassechtheit auszeichnet.

Färbt man bei gleicher Arbeitsweise ein Textilgewebe aus Regenerat-Cellulose (Viskose), so erhält man auch auf diesem Material mit dem Farbstoff des Beispiels 7 eine farbstarke rote Färbung, die eine gute Lichtechtheit und sehr gute Nassechtheit besitzt.

**Patentansprüche**

1. Wasserlösliche Triazinverbindungen der Formel I

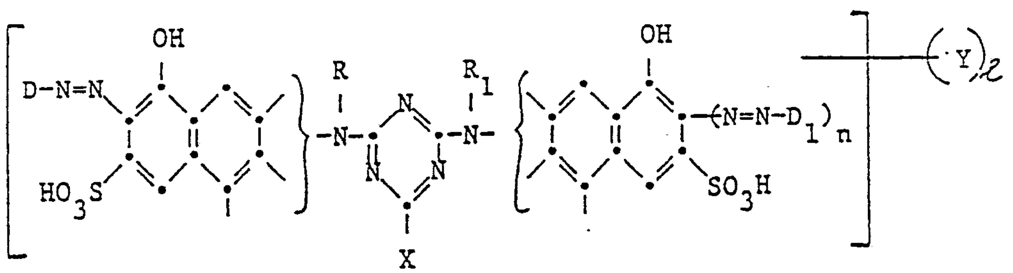

(I)

worin bedeuten :

D und $D_1$ unabhängig voneinander den Rest einer Diazokomponente,

R und $R_1$ unabhängig voneinander Wasserstoff oder $C_1$-$C_4$ Alkyl,

X eine mono- oder disubstituierte Aminogruppe, eine $C_1$-$C_4$ Alkoxygruppe oder eine Aryloxygruppe,

Y basische oder kationische Gruppen, die gleich oder verschieden sein können,

$\ell$ = 2, 3, 4, 5, 6

n = 0 oder 1, wobei im Molekül die Anzahl der basischen und/oder kationischen Gruppen gleich oder grösser als die Anzahl der $SO_3H$-Gruppen sein muss.

2. Wasserlösliche Triazinverbindungen gemäss Anspruch 1, worin bedeutet : D und $D_1$ unabhängig voneinander eine Diazokomponente der Formel

$$D_2—(N=N—D_3)_m—,$$

worin

$D_2$ für einen Rest der Benzol-, Naphthalin- oder heterocyclischen Reihe,

$D_3$ für Phenylen oder Naphthylen und

m für 0 oder 1 steht und worin $D_2$ und/oder $D_3$ ausser durch Y noch weiter substituiert sein können.

3. Wasserlösliche Triazinverbindungen gemäss den Ansprüchen 1 und 2, worin R und $R_1$ je Wasserstoff bedeuten.

4. Wasserlösliche Triazinverbindungen gemäss den Ansprüchen 1 bis 3, worin X eine mono- oder disubstituierte Aminogruppe bedeutet.

5. Wasserlösliche Triazinverbindungen gemäss den Ansprüchen 1 bis 4, worin Y für basische Gruppen der Formel

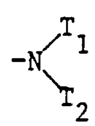

steht, worin bedeuten :

$T_1$ und $T_2$ unabhängig voneinander Wasserstoff, gegebenenfalls substituiertes $C_1$-$C_4$ Alkyl oder $T_1$ und $T_2$ bildet unter Einschluss des N-Atoms einen heterocyclischen Ring.

6. Wasserlösliche Triazinverbindungen gemäss den Ansprüchen 1 bis 4, worin Y für kationische Gruppen der Formel

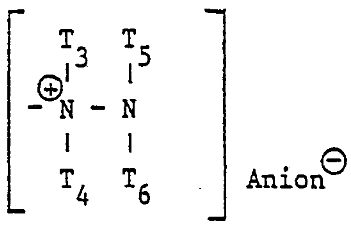

oder

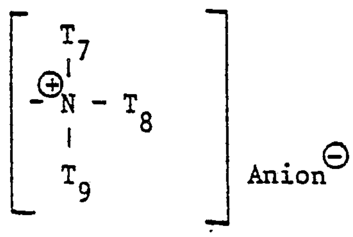

steht, worin bedeuten :

$T_3$ und $T_4$ unabhängig voneinander $C_1$-$C_4$ Alkyl oder Cycloalkyl,
$T_5$ und $T_6$ unabhängig voneinander Wasserstoff, $C_1$-$C_4$ Alkyl oder Cycloalkyl,
$T_7$ gegebenenfalls substituiertes $C_1$-$C_4$ Alkyl oder Cycloalkyl,
$T_8$ gegebenenfalls substituiertes $C_{1-4}$ Alkyl, Cycloalkyl oder $C_1$-$C_4$ Alkoxy,
$T_9$ gegebenenfalls substituiertes $C_1$-$C_4$ Alkyl, oder
$T_7$ bildet zusammen mit $T_8$ und/oder $T_9$ unter Einschluss des N-Atoms einen heterocyclischen Ring.

7. Wasserlösliche Triazinverbindungen gemäss den Ansprüchen 1 bis 6, worin n die Zahl 1 bedeutet.

8. Wasserlösliche Triazinverbindungen gemäss Anspruch 1, dadurch gekennzeichnet, dass Y in X lokalisiert ist.

9. Wasserlösliche Triazinverbindungen gemäss Anspruch 1, dadurch gekennzeichnet, dass X ein aliphatisches, aromatisches, araliphatisches oder heterocyclisches Diamin darstellt.

10. Verfahren zur Herstellung von wasserlöslichen Triazinverbindungen gemäss Anspruch 1, dadurch gekennzeichnet, dass man ein Amin der Formel II

$$NH_2—D \qquad \text{(II) und gegebenenfalls IIa}$$

$$NH_2—D_1 \qquad \text{(IIa)}$$

diazotiert und auf eine Triazinverbindung der Formel III

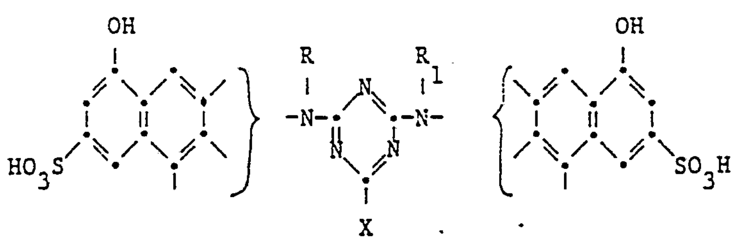

kuppelt, wobei der Rest Y gemäss Anspruch 1 im Rest D, $D_1$ und/oder X lokalisiert ist und die Symbole D, $D_1$, R, X, $R_1$ und Y die in Anspruch 1 angegebene Bedeutung haben.

11. Verwendung der wasserlöslichen Triazinverbindungen gemäss der Ansprüche 1 bis 9 bzw. der nach dem Verfahren gemäss Anspruch 10 erhaltenen wasserlöslichen Triazinverbindungen zum Färben und Bedrucken von natürlichen und synthetischen kationisch anfärbbaren Substraten.

12. Verwendung der wasserlöslichen Triazinverbindungen gemäss der Ansprüche 1 bis 9 bzw. der nach dem Verfahren gemäss Anspruch 10 erhaltenen wasserlöslichen Triazinverbindungen zum Färben und Bedrucken von Papier, Halbkartons und Kartons in der Masse und in der Oberfläche.

## Claims

1. A water-soluble triazine compound of the formula I

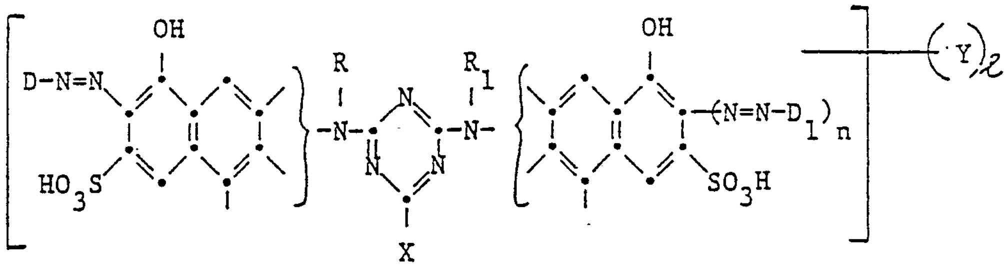 (I)

in which

D and $D_1$ independently of one another are radicals of diazo components,
R and $R_1$ independently of one another are hydrogen or $C_1$-$C_4$-alkyl,
X is a monosubstituted or disubstituted amino group, a $C_1$-$C_4$-alkoxy group or an aryloxy group,
the symbols Y are basic or cationic groups, which can be identical or different,
$\ell$ is 2, 3, 4, 5 or 6 and
n is 0 or 1, and the number of basic and/or cationic groups in the molecule must be equal to or greater than the number of $SO_3H$ groups.

2. A water-soluble triazine compound according to claim 1, in which D and $D_1$ independently of one another are diazo components of the formula

$$D_2—(N=N—D_3)_m—,$$

in which

$D_2$ is a radical of the benzene, naphthalene or heterocyclic series,
$D_3$ is phenylene or naphthylene and
m is 0 or 1, and in which $D_2$ and/or $D_3$ can also be further substituted, as well as by Y.

3. A water-soluble triazine compound according to either of claims 1 and 2, in which R and $R_1$ are each hydrogen.

4. A water-soluble triazine compound according to any one of claims 1 to 3, in which X is a monosubstituted or disubstituted amino group.

5. A water-soluble triazine compound according to any one of claims 1 to 4, in which the symbols Y are basic groups of the formula

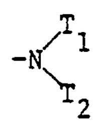

in which $T_1$ and $T_2$ independently of one another are hydrogen or substituted or unsubstituted $C_1$-$C_4$-alkyl, or $T_1$ and $T_2$ form a heterocyclic ring, including the N atom.

6. A water-soluble triazine compound according to any one of claims 1 to 4, in which the symbols Y are cationic groups of the formula

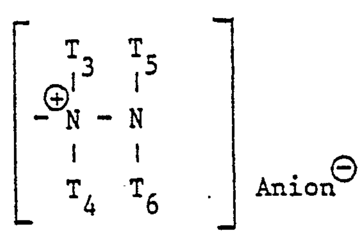

or

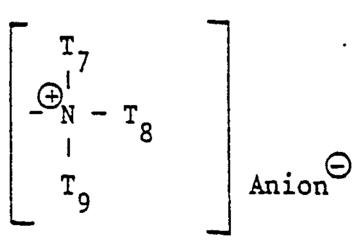

in which $T_3$ and $T_4$ independently of one another are $C_1$-$C_4$-alkyl or cycloalkyl, $T_5$ and $T_6$ independently of one another are hydrogen, $C_1$-$C_4$-alkyl or cycloalkyl, $T_7$ is substituted or unsubstituted $C_1$-$C_4$-alkyl or cycloalkyl, $T_8$ is substituted or unsubstituted $C_1$-$C_4$-alkyl, cycloalkyl or $C_1$-$C_4$-alkoxy and $T_9$ is substituted or unsubstituted $C_1$-$C_4$-alkyl, or $T_7$, together with $T_8$ and/or $T_9$ and including the N atom, forms a heterocyclic ring.

7. A water-soluble triazine compound according to any one of claims 1 to 6, in which n is the number 1.

8. A water-soluble triazine compound according to claim 1, in which Y is located in X.

9. A water-soluble triazine compound according to claim 1, in which X is an aliphatic, aromatic, araliphatic or heterocyclic diamine.

10. A process for the preparation of a water-soluble triazine compound according to claim 1, which comprises diazotising an amine of the formula II

$$NH_2—D \quad (II)$$

and, if appropriate IIa

$$NH_2—D_1 \quad (IIa)$$

and coupling the diazotisation product to a triazine compound of the formula III

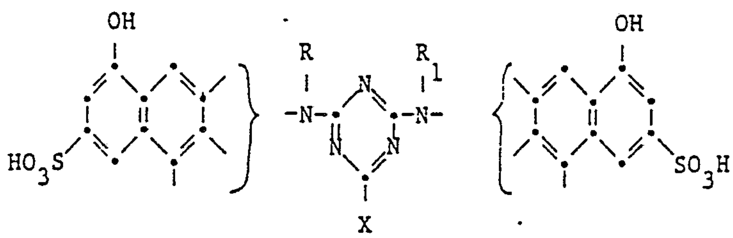

in which the radical Y according to claim 1 is located in the radical D, $D_1$ and/or X and the symbols D, $D_1$, R, X, $R_1$ and Y are as defined in claim 1.

11. The use of a water-soluble triazine compound according to any one of claims 1 to 9 or of a water-soluble triazine compound obtained by the process according to claim 10, for dyeing and printing natural and synthetic substrates which can be dyed with cationic dyes.

12. The use of a water-soluble triazine compound according to any one of claims 1 to 9 or of a water-soluble triazine compound obtained by the process according to claim 10, for dyeing and printing paper, unfinished cardboard and cardboard, in pulp form or on the surface.

**Revendications**

1. Dérivés triaziniques solubles dans l'eau, répondant à la formule I

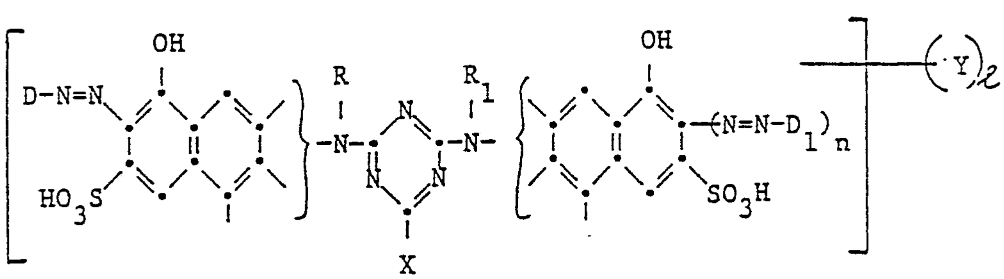

(I)

dans laquelle

D et $D_1$ représentent chacun, indépendamment l'un de l'autre, le radical d'un composant diazotable,

R et $R_1$ représentent chacun, indépendamment l'un de l'autre, un hydrogène ou un groupe alkyle en $C_1$-$C_4$,

X représente un groupe amino mono- ou di-substitué, un groupe alcoxy en $C_1$-$C_4$ ou un groupe aryloxy,

Les symboles Y représentent des groupes basiques ou cationiques qui peuvent être identiques ou différents,

$\ell$ est égal à 2, 3, 4, 5 ou 6,

n est égal à 0 ou 1, étant spécifié que dans la molécule, le nombre des groupes basiques et/ou cationiques doit être égal ou supérieur au nombre des groupes $SO_3H$.

2. Dérivés triaziniques solubles dans l'eau selon la revendication 1, dans lesquels D et $D_1$ représentent chacun, indépendamment l'un de l'autre, un composant diazotable de formule

$$D_2-(N=N-D_3)_m-,$$

dans laquelle

$D_2$ représente un radical de la série benzénique, naphtalénique ou hétérocyclique,

$D_3$ représente un groupe phénylène ou naphtylène et

m est égal à 0 ou 1, $D_2$ et $D_3$ pouvant encore porter des substituants autres que Y.

3. Dérivés triaziniques solubles dans l'eau selon les revendications 1 et 2, dans lesquels R et $R_1$ représentent chacun un hydrogène.

4. Dérivés triaziniques solubles dans l'eau selon les revendications 1 à 3, dans lesquels X représente un groupe amino mono- ou di-substitué.

5. Dérivés triaziniques solubles dans l'eau selon les revendications 1 à 4, dans lesquels les symboles Y représentent des groupes basiques de formule

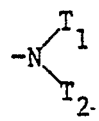

dans laquelle

$T_1$ et $T_2$ représentent chacun, indépendamment l'un de l'autre, un hydrogène ou un groupe alkyle en $C_1$-$C_4$ éventuellement substitué, ou bien $T_1$ et $T_2$ forment ensemble et avec l'atome d'azote un noyau hétérocyclique.

6. Dérivés triaziniques solubles dans l'eau selon les revendications 1 à 4, dans lesquels les symboles Y représentent des groupes cationiques de formule

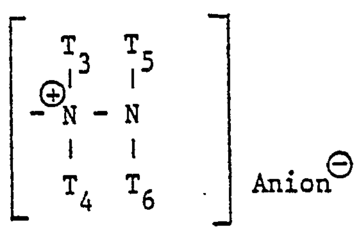

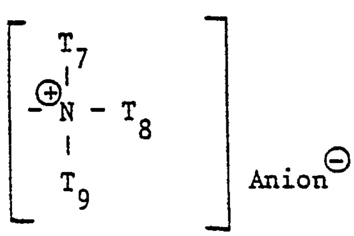

dans lesquelles

$T_3$ et $T_4$, représentent chacun, indépendamment l'un de l'autre, un groupe alkyle en $C_1$-$C_4$ ou cycloalkyle,

$T_5$ et $T_6$ représentent chacun, indépendamment l'un de l'autre, un hydrogène ou un groupe alkyle en $C_1$-$C_4$ ou cycloalkyle,

$T_7$ représente un groupe alkyle en $C_1$-$C_4$ ou cycloalkyle, éventuellement substitué,

$T_8$ représente un groupe alkyle en $C_1$-$C_4$, cycloalkyle ou alcoxy en $C_1$-$C_4$, éventuellement substitué,

$T_9$ représente un groupe alkyle en $C_1$-$C_4$ éventuellement substitué, ou bien

$T_7$ forme, avec $T_8$ et/ou $T_9$ et l'atome d'azote, un noyau hétérocyclique.

7. Dérivés triaziniques solubles dans l'eau selon les revendications 1 à 6, dans lesquels n est égal à 1.

8. Dérivés triaziniques solubles dans l'eau selon la revendication 1, caractérisés en ce que Y est localisé sur X.

9. Dérivés triaziniques solubles dans l'eau selon la revendication 1, caractérisés en ce que X représente une diamine aliphatique, aromatique, araliphatique ou hétérocyclique.

10. Procédé de préparation des dérivés triaziniques solubles dans l'eau selon la revendication 1, caractérisé en ce que l'on diazote une amine de formule II

$$NH_2—D \quad (II)$$

$$NH_2—D_1 \quad (IIa)$$

et on effectue une copulation sur un dérivé triazinique de formule III

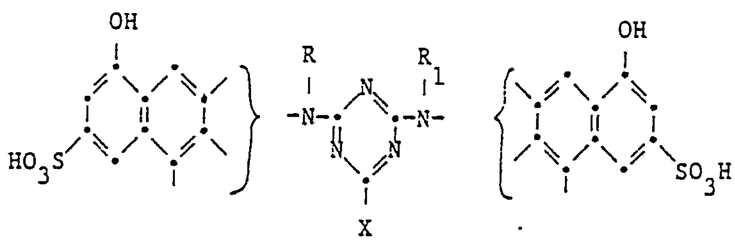

le groupe Y de la revendication 1 étant localisé sur le groupe D, $D_1$ et/ou X, et les symboles D, $D_1$, R, X, $R_1$ et Y ayant les significations indiquées dans la revendication 1.

11. Utilisation des dérivés triaziniques solubles dans l'eau selon les revendications 1 à 9 ou des dérivés triaziniques solubles dans l'eau obtenus par le procédé de la revendication 10, pour la teinture et l'impression de substrats naturels ou synthétiques, aptes à la teinture par des colorants cationiques.

12. Utilisation des dérivés triaziniques solubles dans l'eau selon les revendications 1 à 9 ou des dérivés triaziniques solubles dans l'eau obtenus par le procédé de la revendication 10, pour la coloration et l'impression du papier, des semi-cartons et des cartons, dans la masse et en surface.